# EUROPÄISCHE PATENTSCHRIFT

(11) **EP 2 260 214 B1**
(45) Veröffentlichungstag und Bekanntmachung des Hinweises auf die Patenterteilung: **15.05.2013**
(21) Anmeldenummer: 09721447.2
(22) Anmeldetag: 16.03.2009
(51) Int. Cl.: F16D 23/06

(54) **ARRETIERUNG**
CATCH
DISPOSITIF D'ARRÊT

(30) Priorität: 17.03.2008 DE 102008014483
(43) Veröffentlichungstag der Anmeldung: 15.12.2010
(73) Patentinhaber: Schaeffler Technologies AG & Co. KG, 91074 Herzogenaurach (DE)
(72) Erfinder: BÖSSNER, Ralf, 91217 Hersbruck (DE); GRESSMANN, Holger, 90768 Fürth (DE); SPOERL, Marcus, 91126 Rednitzhembach (DE)
(86) Internationale Anmeldenummer: PCT/EP2009/001905
(87) Internationale Veröffentlichungsnummer: WO 2009/115269

(56) Entgegenhaltungen:
- EP-A- 1 251 418
- DE-A1- 2 706 661
- DE-C1- 19 580 558

## Beschreibung

Die Erfindung betrifft eine Arretierung zum Arretieren eines ersten Getriebeteils an einem zweiten Getriebeteil in wenigstens einer Stellposition. Die Arretierung ist in einer Synchronisiereinrichtung einsetzbar und im verbauten Zustand bezüglich eines Zähne aufweisenden Synchronkörpers an dessen Außenumfang axial verschiebbar, wobei sie ein mit einem Federelement belastetes Rastelement zum Verrasten in einer Stellposition und ein Gehäuse, das eine nach außen gerichtete, in etwa rechteckige Radialfläche mit Axialrändern und in Umfangsrichtung orientierten Seitenrändern besitzt, aufweist, wobei im Inneren der Radialfläche das Rastelement angeordnet ist

### Hintergrund der Erfindung

Es ist dem Fachmann bekannt, dass derartige Arretierungen in verschiedenen Anwendungen der Schaltgetriebe von Kraftfahrzeugen eingesetzt sind. Sie arretieren z. B. bewegliche Getriebeelemente in Schalt- oder Wählpositionen, so dass diese Getriebeelemente, beispielsweise trotz Erschütterungen während des Fahrbetriebs, in den vorgegebenen Stellpositionen verbleiben. Derartige Getriebeelemente sind z. B. dreh- und längsverschiebbare Schaltwellen, längsverschiebbare Schaltschienen und schwenkbare Schaltbolzen. Die Arretierungen sind dabei gegen eine Rastkontur vorgespannt, deren Oberfläche in der Regel durch die Kontur eines Rastgebirges mit Erhöhungen und Vertiefungen beschrieben ist. In den vorgegebenen Wähl- bzw. Schaltpositionen verrastet die Arretierung in einer der Vertiefungen des Rastgebirges und hält das Getriebeelement in dieser Position. In der Vergangenheit war die Fachwelt bestrebt, in handgeschalteten Getrieben besonders für die letztgenannten Anwendungen Arretierungen einzusetzen, bei denen in aufwändiger Weise längsbeweglich wälzgelagerte Arretierbolzen mit einer kugelgelagerten Arretierkugel in einem Gehäuse der Arretierung eingesetzt sind. Mit dem Einsatz derartig wälzgelagerter Arretierungen sollte und soll das von der Bedienperson am Handschalthebel beim Wählen und Schalten deutlich spürbare, an der Oberfläche der gegen die Arretierung bewegten Getriebeelemente erzeugte Hakeln gemindert werden. Mit dem immer häufigeren Einsatz von hilfskraftbetätigten bzw. automatisierten Schaltgetrieben ist die Verwendung derartiger relativ kostspieliger Arretierungen oftmals nicht mehr notwendig. In ihrer Ausführung einfachere, jedoch robuste und kostengünstig herzustellende Arretierungen sind zunehmend gefragt.

Arretierungen sind weiterhin auch in den bekannten Schaltkupplungen vorgesehen, die für das drehfeste Verbinden von Gangrädern mit einer Getriebewelle beim Schalten von Gängen eingesetzt sind. Die Schaltmuffe dieser Schaltkupplungen ist auf dem Synchronkörper zumeist in einer neutralen Position mittels der Arretierung gehalten. In dieser Stellposition sind gegen die Schaltmuffe drei bis vier am Umfang des Synchronkörpers angeordnete und an diesem gehaltene Arretierungen vorgespannt. Dazu stützen sich die Arretierungen an dem Synchronkörper ab und greifen mit einem Rastelement in Rastvertiefungen an der Schaltmuffe. Eine gattungsgemäße Arretierung ist aus EP-A-1 251 418 bekannt.

Die Arretierungen sitzen längsverschiebbar in dem Synchronkörper. Der Synchronkörper ist mit Aufnahmen für diese Arretierungen versehen. Die Stabilität des Trägers, insbesondere die Steifigkeit seiner Körperstruktur ist aufgrund der Ausnehmungen geringer Tiefe nur relativ geringfügig nachteilig beeinflusst.

Eine derartige Arretierung ist beispielsweise in DE 195 80 558 C1 beschrieben. Die Arretierungen besitzen eine T-förmige Querschnittsform und weisen ein hülsenartiges eine Druckfeder und ein Rastelement aufnehmendes Fußteil und ein quaderförmiges Kopfteil auf. Die Arretierung ist in einer zu ihrer Querschnittsform komplementären Aufnahme des Synchronkörpers angeordnet, welche als Längsnut ausgebildet ist, so dass die Arretierung in der Längsnut frei verschiebbar ist.

Bei einer Schaltbewegung nimmt die Schaltmuffe die Arretierung zunächst in Richtung des zu schaltenden Gangrades längs mit, wodurch der bekannte Synchronisationsprozess eingeleitet ist. Größerer axialer Widerstand auf das Rastelement bei weiter in Richtung des Gangrads längsbewegter Schaltmuffe zwingt das Federelement aus der Rastvertiefung an der Schaltmuffe in Richtung des Grundkörpers einzufedern. Das Federelement schnappt wieder in die Rastvertiefung ein, wenn die Schaltmuffe in die neutrale Stellposition zurückgeführt wird. Nachteilig an der an sich zufriedenstellenden Lösung ist, dass das Rastelement, insbesondere es als Druckstück eingesetzt ist, bei schräg eingeleiteten Kräften verkippen kann. Durch ein Verkippen kann es zu einer Verklemmung oder einer Verhakung zwischen Synchronkörper und Schaltmuffe kommen.

Eine Lösung für dieses Problem ist in DE 10 2006 018 284 A1 offenbart, die Druckstücke mit Flügeln vorsieht, wobei die Flügel auf dem Kopfkreisdurchmesser der Außenverzahnung des Synchronkörpers so angeordnet sind, dass sich durch den Fußkreis der Schaltmuffe eine Kopfzentrierung für das Druckstück gebildet wird. Diese vorteilhafte Lösung benötigt für eine gute Führung möglichst lange Flügel, damit stets sichergestellt ist, dass sich das Druckstück ausreichend am Synchronkörper bzw. der Schaltmuffe abstützen kann. Infolgedessen wächst der benötigte Bauraum, um einen ausreichend langen Ausrückweg für das Druckstück zu gewährleisten. Damit die Synchronisationseinheit nicht mehr Bauraum benötigt als konventionelle Synchronisationseinheiten, werden Anschlagnasen der Synchronringe durch Zungen ersetzt, die die Sperrfunktion übernehmen, die in Index-Aussparungen des Synchronkörpers eingreifen. Die Index-Aussparungen führen zu einer zusätzlichen Schwächung des Synchronkörpers bzw. erfordern einen axial breiteren Synchronkörper, um diese Funktion zu integrieren.

### Zusammenfassung der Erfindung

Die Aufgabe der Erfindung ist es, eine Arretierung zu schaffen, die auch gegenüber schräg eingeleiteten Kräften robust ist, die bei hohen Drehzahlen nicht derart vom Synchronkörper abhebt, dass sie mit der Verzahnung der Schaltmuffe verhakt, die einfach zu fertigen ist, die sich für lange Verschiebewege eignet und gleichzeitig eine axial kurz bauende und möglichst leichte Synchronisiereinrichtung ermöglicht.

Diese Aufgabe ist durch eine Arretierung gemäß Anspruch 1 gelöst. Das Gehäuse der erfindungsgemäßen Arretierung weist in Umfangsrichtung weisende Flügel auf, die in ihrer axialen Breite gegenüber der Axialerstreckung der Radialfläche reduziert sind. Ferner sind die Flügel in der Ebene der nach außen weisenden Radialfläche angeordnet und kragen somit nicht weiter aus als die Radialfläche selbst. Sie sind parallel zur Radialfläche bzw. in Umfangsrichtung gerichtet ausgebildet oder nach innen weisend orientiert. Dabei ist nach innen weisend als von der Tangente der die Arretierung aufnehmenden Ausnehmung nach innen weisend, aber nicht genau nach radial innen gerichtet zu verstehen.

Die Flügel weisen im Wesentlichen in Umfangsrichtung und sind durch den Synchronkörper in radialer Richtung geführt. Die Flügel schließen bündig an der nach radial nach außen gerichtete Radialfläche an. Eine derartige Ausbildung der Flügel vereint mehrere Vorteile. Zum einen kann dadurch die Bauhöhe der Arretierung minimiert werden, so dass im Synchronkörper an den für die Flügel vorgesehenen Auflageflächen weniger Material entfernt werden muss. Dadurch steigt die Belastungsfähigkeit des Synchronkörpers, und der Herstellungsaufwand kann ggf. reduziert werden. Zum anderen können die Flügel sehr kurz ausgebildet sein, was einer großserienmäßigen Herstellung aus Blech entgegenkommt, da leichter die erforderliche Genauigkeit realisiert werden kann.

Eine derartige Arretierung eignet sich besonders für eine Synchronisiereinheit mit einem Synchronkörper. Die Flügel bewirken, dass die Arretierung auch bei sehr hohen Drehzahlen des Synchronkörpers nicht abheben kann, da sie sich an der Schaltmuffenverzahnung abstützen können und somit die Gefahr einer Verhakung mit der Dachverzahnung der Schaltmuffe reduziert ist.

Dadurch dass die Flügel fluchtend mit der Radialfläche ausgebildet sind, wird eine einteilige Herstellung der Flügel mit dem übrigen Gehäuse ermöglicht.

Ferner liegen die Flügel auf oder unterhalb des Fußkreises der Synchronkörperverzahnung. Dies ist vorteilhaft, da eine zusätzliche Seitenführung gemäß Anspruch 3 möglich ist. Ferner kann die Anzahl der Drehmoment übertragenden Zähne gesteigert werden, weil bereits die dem Zahn mit der Nut für das Rastelement unmittelbar benachbarten Zähne der Schaltmuffe für die Führung des Druckstücks in radialer Richtung verwendet werden können.

Die Verkürzung der Flügelbreite gegenüber der Radialflächenbreite ermöglicht außerdem eine einteilige Herstellung, ohne dass auf zusätzliche Seitenwände verzichtet werden muss, über die sich das Arretierelement in Umfangsrichtung am Synchronkörper abstützen kann.

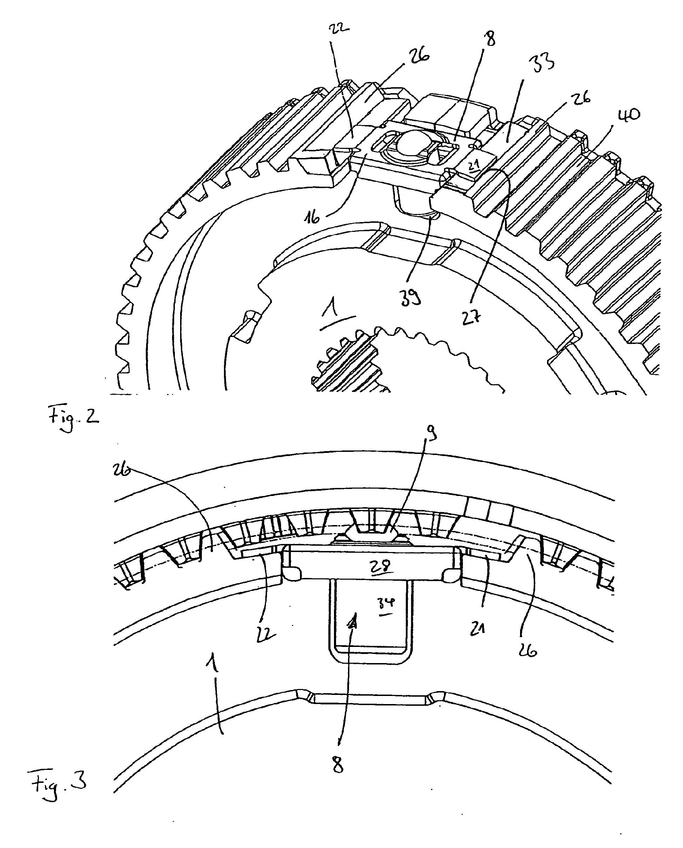

Die Erfindung kann besonders vorteilhaft eingesetzt werden, wenn das Rastelement axial nur von schmalen Stegen flankiert ist, so dass die axiale Breite der Radialfläche möglichst klein ist. Dadurch ist es möglich, eine verhakungssicherer Arretierung bei einem Synchronkörper einzusetzen, in dessen für die Arretierung vorgesehene Axialnut ein Mitnehmer eines Synchronrings ragt (Figur 2). Separate Aufnahmen für Laschen oder Zungen, die möglicherweise zusätzliche Arbeitsgänge bei der Herstellung des Synchronkörpers oder eine Verbreiterung des Synchronkörpers erfordern, können entfallen. Somit kann ein langer Ausrückweg realisiert werden, ohne Gefahr zu laufen, dass das Druckstück sich verklemmt. In Versuchen hat sich herausgestellt, dass für eine optimale Funktion einer Synchronisiereinrichtung mit einer derartigen Arretierung die axiale Breite des Synchronkörpers um mindestens 50% größer sein sollte als die Flügelbreite, um ein sicheres Schalten bei minimalem Bauraum sicherzustellen.

In einer Weiterbildung der Erfindung sind die Flügel eben ausgebildet und bilden somit eine teilweise Fortsetzung der Radialfläche. Derartige Flügel sind besonders einfach herzustellen und benötigen keine zusätzlichen Umformschritte. Alternativ dazu sind die Flügel um einen Winkel von der Umfangsrichtung geneigt. Damit wird erreicht, dass bei vielen Synchronkörpern sich die Krafteinleitung beim Abstützen aufgrund dessen Krümmung verbessert. Um eine optimale Pressung zu erreichen, sind die Flügel der am Synchronkörper angeordneten Gegenfläche für die Aufnahme der Flügel derart angepasst, dass sie über ihre ganze Fläche gleichmäßig belastet werden. Dazu können sie auch, sollte die Gegenfläche des Synchronkörpers einen Zylindermantelabschnitt bilden, verrundet sein. Eine derartige flächenmäßige Belastung ermöglicht es, die Breite der Flügel möglichst kurz zu halten, was zum einen die Neigung zum Verkippen weiter reduziert und beim Synchronkörper unter Umständen durch die kurze Auflagefläche ermöglicht, die Anzahl der am Umfang angeordneten Zähne zu erhöhen, wodurch die Tragzahl des Systems steigt.

In einer weiteren Variante der Erfindung ist die Länge der Flügel in Umfangsrichtung so ausgebildet, dass die angrenzenden Zähne des Synchronkörpers die Arretierung sicher führen. Die Länge der Flügel entspricht damit der in Umfangsrichtung gesehenen Breite der Auflagefläche am Synchronkörper. Die Zahnflanken führen daher die Flügel in axialer Richtung. Hiermit wird wiederum einem Verkippen vorgebeugt, was insbesondere bei Verwendung von Arretierungen mit flachen Außenmaßen von Vorteil ist. Derartige Arretierungen sind insbesondere in DE 10 2005 018 900 A1, Absätze [0031] bis [0035] mit den Figuren 2-5, oder in DE 10 2005 018899, Absätze [0028] bis [0031] mit den Figuren 2-4 offenbart, auf die der Gegenstand der Erfindung ohne Mühe übertragen werden kann: Der Deckel bzw. die Kappe dieser Arretierungen lassen sich auf einfache Weise mit Flügeln ausbilden, die über den Grundkörper der Arretierungen seitlich herausragen.

Die Führung durch die angrenzenden Zähne wird noch verbessert, wenn die Flügel eine in Umfangsrichtung gerade Abschlusskante aufweisen, wie dies bei einem rechteckigen Flügel der Fall ist. Dadurch besteht ein linienförmiger Kontakt, der auch ein Verdrehen ausschließt.

Damit die Flügel auf der Auflagefläche besonders gut gleiten, können ihre Unterseiten mit einer geeigneten Beschichtung versehen sein.

In einer Weiterbildung dieser Ausführungsform sind zwischen dem Anschluss der Flügel an das Gehäuse und der Radialfläche an deren Seitenrändern Einkerbungen vorgesehen. Die Einkerbungen können mittels der Finite-Elemente-Methode berechnet werden und führen zu einer optimalen Spannungsverteilung in der Arretierung beim Schaltbetrieb.

Um die erfindungsgemäße Arretierung zu versteifen und damit Lebensdauer und Kraftübertragung zu erhöhen, weist die Arretierung in einer weiteren Ausbildung nach radial innen orientierte Axialwände auf, die von den axialen Rändern der Radialfläche ausgehen. Mit den Axialwänden sind gegebenenfalls Mitnehmer von Synchronringen gut betätigbar. Besonders stabil wird die Arretierung, wenn noch weitere Seitenwände hinzukommen, so dass ein wannenförmiger Grundkörper gebildet wird mit der Radialfläche als umgekehrter Boden.

Das Gehäuse kann mit Mitteln ausgestattet sein, die eine zusätzliche Führung bzw. eine Verliersicherung in der Axialnut des Synchronkörpers sicherstellen. Derartige Mittel können insbesondere die Axialwände oder die Seitenwände darstellen, die mit einem am Synchronkörper angeordneten Vorsprung zusammenwirken.

Schließlich ist für die Bildung einer steifen Arretierung und einer sicheren Führung des Rastelements von Vorteil, wenn zwischen den Flügeln und dem Rastelement eine Ausnehmung angeordnet ist und das Material verwendet wird, um höher belastete Stellen zu versteifen. Zusätzlich kann das Material genutzt werden, um eine Halterung für das Rastelement in dem Gehäuse der Arretierung sicherzustellen.

Die bisher erläuterten Ausbildungen der Erfindung eignen sich besonders für Arretierungen aus Blech und aus Kunststoff, die somit preisgünstig und unaufwändig hergestellt werden können. Sie weisen gute Langzeiteigenschaften auf. Die Weiterbildungen lassen sich sowohl auf im Querschnitt T-förmige Arretierungen als auch auf quaderförmige oder anders geformte Arretierungen anwenden.

Die Erfindung ermöglicht es, die Flügel einteilig mit dem Gehäuse auszubilden. Dadurch lässt sich der Herstellungsaufwand beträchtlich minimieren, da aufwändige Verbindungen des das Federelement einkapselnden Gehäuses mit den Flügeln vermieden wird. Eine besonders einfache Herstellbarkeit wird durch ein Verfahren erreicht, bei dem das Gehäuse mit der Aufnahme für die Feder, der Radialfläche und den Flügeln aus einem im Ausgangszustand ebenen Blech durch Stanzen, ggf. Tiefziehen und für Blech geeignete Kaltumformtechniken geformt wird. Das Rastelement mit der Feder kann beispielsweise vor einem letzten Bördelschritt in das vorgeformte Gehäuse eingesetzt werden. Diese Art der Herstellung ist insbesondere für die Massenproduktion gut geeignet, da auf zeitintensive und aufwändige Verbindungstechniken verzichtet werden kann.

Die zuvor beschriebenen Maßnahmen lassen sich auch untereinander kombinieren, um eine für den jeweiligen Anwendungsfall geeignete Arretierung zu schaffen.

Die Erfindung betrifft ebenfalls einen Synchronkörper zur Aufnahme einer derartigen Arretierung und eine Synchronisiereinrichtung mit einer erfindungsgemäßen Arretierung.

### Kurze Beschreibung der Zeichnungen

Die Erfindung ist nachfolgend anhand von Ausführungsbeispielen näher erläutert. Es zeigen:
- Figuren 1a und 1b: eine Synchronisationskupplung nach dem Stand der Technik, wobei Figur 1a die Schaltmuffe in ihrer neutralen Position und Figur 1b die Schaltmuffe in einer geschalteten Stellung zeigt,
- Figur 2: eine perspektivische Darstellung einer erfindungsgemäßen Arretierung mit einem Synchronkörper
- Figur 3: einen Querschnitt der Anordnung aus Figur 2
- Figur 4: einen weiteren Querschnitt der Anordnung aus Figur 2 in einer versetzten Schnittebene,
- Figur 5: die Arretierung aus Figur 2 ohne Synchronkörper.

### Detaillierte Beschreibung der Zeichnungen

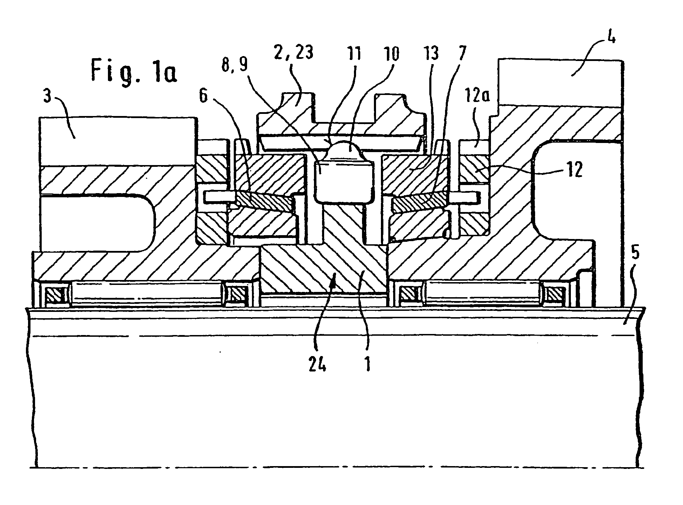

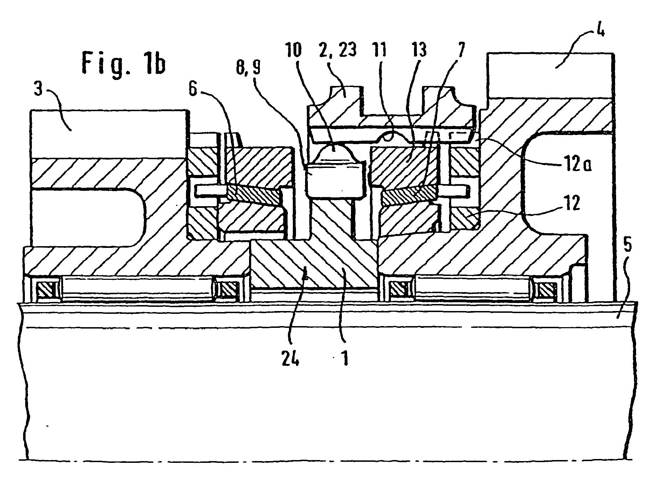

Die Figuren 1 a und 1 b zeigen eine Synchronkupplung 24 aus einem Synchronkörper 1 und aus einer Schaltmuffe 2 zum wahlweisen Kuppeln der Gangräder 3 und 4. Die Gangräder 3, 4 sind drehbar aber längs fest auf einer Schaltwelle 5 gelagert. Der Synchronkörper 1 sitzt verdrehfest sowie längs fest auf der Schaltwelle 5 und trägt auf seinem Außenumfang das Getriebeteil 23 in Form der Schaltmuffe 2. Die Schaltmuffe 2 ist mittels einer Verzahnung drehfest zu dem Synchronkörper 1 und damit zur Schaltwelle 5 aber längs wahlweise in Richtung eines der Gangräder 3 oder 4 verschiebbar auf dem Synchronkörper 1 angeordnet. An jeder Seite des Synchronkörpers 1 ist längs zwischen dem Synchronkörper 1 und dem Gangrad 3, 4 jeweils ein Satz 6, 7 Synchronringe angeordnet.

Der Synchronkörper 1 nimmt an seinem Umfang mindestens drei schematisch dargestellte Arretierungen 8 mit Rastelementen 9 auf. Das Rastelement 9 verrastet an der Schaltmuffe 2 in ihrer neutralen Stellposition nach Figur 1 a. In der neutralen Stellposition stützt sich das Rastelement 8 an dem Synchronkörper 1 radial ab und spannt mit einem Deckel 10 gegen die Schaltmuffe 2 vor. Dabei greift das Rastelement 8 mit dem Deckel 10 in eine Rastvertiefung 11 an der Schaltmuffe 2 ein.

Die aus der neutralen Stellposition nach Figur 1a in die geschaltete Position (Figur 1 b) längs auf dem Synchronkörper 1 verschobene Schaltmuffe 2 greift in eine Kupplungsverzahnung 12a einer mit dem Gangrad 4 fest verbundenen Kupplungsscheibe 12 ein. Die Schaltwelle 5 ist über den Synchronkörper 1 und die Schaltmuffe 2 mit dem Gangrad 4 drehfest verbunden, wodurch der dem Gangrad 4 zugeordnete Gang geschaltet ist. Bei der Schaltbewegung der Schaltmuffe 2 in die geschaltete Position nimmt die Schaltmuffe 2 zunächst das in die Rastvertiefung 11 eingreifende Rastelement 9 mit der Arretierung 8 längs mit und verschiebt die Arretierung 8 gegen den äußeren Synchronring 13 des Satzes 7. Der Prozess der Vorsynchronisation ist eingeleitet.

Die weiter in Richtung der Kupplungsverzahnung 12a bewegte Schaltmuffe 2 zwingt das Rastelement 9 der sich an dem äußeren Synchronring 13 abstützenden Arretierung 8 aus der Rastvertiefung 11. Der Deckel 10 federt dabei radial ein. Beim Lösen des Ganges bewegt sich die Schaltmuffe 2 aus der Stellung nach Figur 1b zurück in die neutrale Stellposition nach Figur 1 a. Dabei greift die mit Vorspannung an der Schaltmuffe 2 anliegenden Deckel 10 erneut in die Rastvertiefung 11 ein.

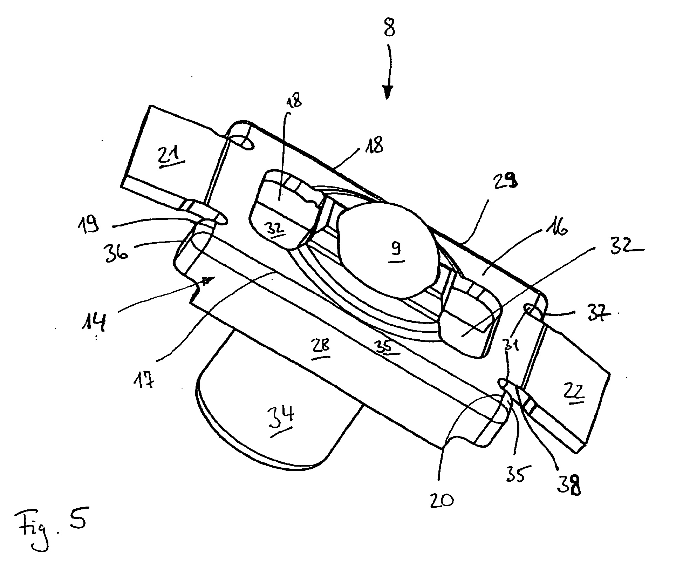

Figur 5 zeigt eine erfindungsgemäße Arretierung 8 mit einem Topf 34, der zylindrisch ausgebildet ist und im Inneren ein als Druckfeder ausgebildetes Federelement 15 führt, das ein als eine Rastkugel ausgebildetes Rastelement 9 beaufschlagt. Das Rastelement 9 ist im Inneren der nach außen gerichteten, rechteckförmigen Radialfläche 16 des Gehäuses 14 angeordnet. Der Topf 34 und die Radialfläche 16, die als nach radial außen weisende Oberfläche eines Quaders ausgebildet ist, bilden im Querschnitt ein T. An den kurzen Enden der Radialfläche 16, den Seitenrändern 19, 20 sind Flügel 21, 22 angeordnet, wobei die axiale Breite der Flügel 21,22 kleiner ist als die der Radialfläche 16. An die Radialfläche 16 schließen sich an den Axialrändern 17, 18 nach innen abgewinkelte Axialwände 28,29 an, wobei deren Übergang 35 verrundet ist. Ebenfalls schließen sich an die Seitenränder 19, 20 Seitenwände 36, 37 an, wobei auch hier der Übergang 35 verrundet ist. Die Flügel 21, 22 sind gegenüber der Radialfläche 16 leicht abgewinkelt und im wesentlichen quadratisch ausgebildet. Zwischen ihnen und dem Rastelement 9 weist die Arretierung 8 Ausnehmungen 32 auf. An den Flügelansätzen 39 sind jeweils Einkerbungen 31 angeordnet.

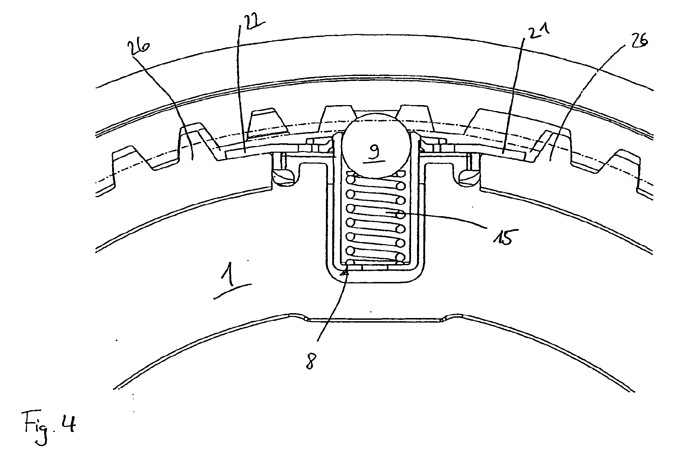

Figuren 2 bis 4 zeigen die Anordnung der Arretierung 8 in einem Synchronkörper 1 mit Auflageflächen 33. Die Arretierung 8 ist in einer Aufnahme 39 geführt, wobei die Flügel 21, 22 der Arretierung 8 auf einer Auflagefläche 33 mit dem Synchronkörper 1 eine Kontaktfläche 27 bilden. Die benachbarten Zähne 26 führen die Flügel 21, 22, entlang der Aufnahme 39. Die Breite der Kontaktfläche 39 entspricht in etwa einer Zahnbreite. Ihre radiale Höhe entspricht in etwa dem Zahngrund 40, wobei diese abweichend hiervor als etwas höher oder tiefer verlaufen kann als der Zahngrund 40.

Zur axialen Wegbeschränkung der Arretierung 8 ist ein axialer Anschlag 41 auf der Auflagefläche 33 angeordnet, so dass die Arretierung 8 verliersicher gehalten ist. Die Breite der Flügel 21, 22 ist gegenüber der Radialfläche 16 des Gehäuses 14 reduziert, so dass dennoch ein großer axialer Verschiebeweg gegeben ist.

### Bezugszeichen

| | |
|---|---|
| 1 | Synchronkörper |
| 2 | Schaltmuffe |
| 3 | Gangrad |
| 4 | Gangrad |
| 5 | Schaltwelle |
| 6 | Satz |
| 7 | Satz |
| 8 | Arretierung |
| 9 | Druckstück |
| 10 | Deckel |
| 11 | Rastvertiefung |
| 12 | Kupplungsscheibe |
| 12a | Kupplungsverzahnung |
| 13 | äußerer Synchronring |
| 14 | Gehäuse |
| 15 | Federelement |
| 16 | Radialfläche |
| 17 | Axialrand |
| 18 | Axialrand |
| 19 | Seitenrand |
| 20 | Seitenrand |
| 21 | Flügel |
| 22 | Flügel |
| 23 | erstes Getriebeteil |
| 24 | zweites Getriebeteil |
| 25 | Synchronisiereinrichtung |
| 26 | Zahn |
| 27 | Kontaktfläche |
| 28 | Axialwand |
| 29 | Axialwand |
| 30 | Grundkörper |
| 31 | Einkerbung |
| 32 | Ausnehmung |
| 33 | Auflagefläche |
| 34 | Topf |
| 35 | Übergang |
| 36 | Seitenwand |
| 37 | Seitenwand |
| 38 | Flügelansatz |
| 39 | Aufnahme |
| 40 | Zahngrund |
| 41 | Anschlag |

## Patentansprüche

1. Arretierung (8) einer Synchronisiereinrichtung (25), die im verbauten Zustand bezüglich eines Zähne (26) aufweisenden Synchronkörpers (1) an dessen Außenumfang axial verschiebbar ist, wobei die Arretierung (8) aufweist:
- ein mit einem Federelement (15) belastetes Rastelement (9) zum Verrasten in einer Stellposition und
- ein Gehäuse (14), das einen an das Federelement (15) angepassten Topf (34) und eine nach außen gerichtete, in etwa rechteckige Radialfläche (16) mit Seitenrändern (19, 20) aufweist, wobei im Inneren der Radialfläche (16) das Rastelement (9) angeordnet ist,
- Flügel (21, 22), welche an den Seitenrändern (19, 20) angeordnet und im Wesentlichen parallel zur Radialfläche (16) ausgebildet sind,
**dadurch gekennzeichnet, dass** die Flügel (21, 22) in Radialrichtung gesehen mit der Radialfläche (16) fluchtend ausgebildet sind und dass die axiale Breite der Flügel (21, 22) kleiner ist als die minimale, axiale Breite der Radialfläche (16).

2. Arretierung nach Anspruch 1, **dadurch gekennzeichnet, dass** die Flügel (21, 22) eine Krümmung aufweisen, die dem Außenradius des Synchronkörpers (1) entspricht.

3. Arretierung nach Anspruch 1, **dadurch gekennzeichnet, dass** die Länge der Flügel (21, 22) in Umfangsrichtung so ausgebildet ist, dass die Arretierung (8) durch angrenzende Zähne (26) des Synchronkörpers (1) geführt wird.

4. Arretierung nach Anspruch 1, **dadurch gekennzeichnet, dass** die Flügel (21, 22) rechteckförmig ausgebildet sind.

5. Arretierung nach Anspruch 1, **dadurch gekennzeichnet, dass** das Gehäuse (14) mit den Flügeln (21, 22) einteilig hergestellt ist.

6. Arretierung nach Anspruch 1, **dadurch gekennzeichnet, dass** die Seitenränder (19, 20) am Flügelansatz Einkerbungen (31) aufweisen.

7. Arretierung nach Anspruch 1, **dadurch gekennzeichnet, dass** die Radialfläche (16) an ihren axialen Enden radial nach innen orientierte Axialwände (28, 29) aufweist.

8. Arretierung nach Anspruch 6, **dadurch gekennzeichnet, dass** die Radialfläche (16) den Boden und die Axialwände (28, 29) Seitenwände eines radial nach innen orientierten wannenförmigen Grundkörpers (30) bilden.

9. Arretierung nach Anspruch 1, **dadurch gekennzeichnet, dass** die Arretierung (8) aus Blech oder Kunststoff ausgebildet ist.

10. Arretierung nach Anspruch 1, **dadurch gekennzeichnet, dass** die Arretierung (8) zwischen den Flügeln (21, 22) und dem Rastelement (9) fensterartige Ausnehmungen (32) aufweist.

11. Synchronisiereinrichtung (24) mit einem Synchronkörper (1), einer Schaltmuffe (2) und einer Arretierung (8) nach einem der Ansprüche 1-10, **dadurch gekennzeichnet, dass** die axiale Breite des Synchronkörpers (1) um mindestens 50% größer ist als die axiale Breite der Flügel (21, 22).

12. Verfahren zur Herstellung einer Arretierung nach einem der Ansprüche 1-10, **dadurch gekennzeichnet, dass** das Gehäuse der Arretierung (8) aus einem ebenen Blech ausschließlich mittels Kaltumformtechniken hergestellt wird.

## Claims

1. Catch (8) of a synchronizing device (25) which, in the installed state, can be displaced axially, with respect to a synchronous body (1) having teeth (26), on the outer circumference of the said synchronous body, the catch (8) having:
- a latching element (9), loaded by a spring element (15), for latching in an actuation position, and
- a housing (14) which has a pot (34) adapted to the spring element (15) and an approximately rectangular radial surface (16) directed outwards and having side edges (19, 20), the latching element (9) being arranged inside the radial surface (16),
- wings (21, 22) which are arranged at the side edges (19, 20) and are formed essentially parallel to the radial surface (16),
**characterized in that** the wings (21, 22) are designed to be in alignment with the radial surface (16), as seen in the radial direction, and **in that** the axial width of the wings (21, 22) is smaller than the minimum axial width of the radial surface (16).

2. Catch according to Claim 1, **characterized in that** the wings (21, 22) have a curvature which corresponds to the outer radius of the synchronous body (1).

3. Catch according to Claim 1, **characterized in that** the length of wings (21, 22) in the circumferential direction is designed such that the catch (8) is guided by adjacent teeth (26) of the synchronous body (1).

4. Catch according to Claim 1, **characterized in that** the wings (21, 22) are of rectangular form.

5. Catch according to Claim 1, **characterized in that** the housing (14) is produced in one part with the wings (21, 22).

6. Catch according to Claim 1, **characterized in that** the side edges (19, 20) have notches (31) at the wing root.

7. Catch according to Claim 1, **characterized in that** the radial surface (16) has radially inward-oriented axial walls (28, 29) at its axial ends.

8. Catch according to Claim 6, **characterized in that** the radial surface (16), the bottom and the axial walls (28, 29) form side walls of a radially inward-oriented trough-shaped basic body (30).

9. Catch according to Claim 1, **characterized in that** the catch (8) is formed from sheet metal or plastic.

10. Catch according to Claim 1, **characterized in that** the catch (8) has window-like recesses (32) between the wings (21, 22) and the latching element (9).

11. Synchronizing device (24) with a synchronous body (1), with a shift sleeve (2) and with a catch (8) according to one of Claims 1 - 10, **characterized in that** the axial width of the synchronous body (1) is at least 50% larger than the axial width of the wings (21, 22).

12. Method for producing a catch according to one of Claims 1 - 10, **characterized in that** the housing of the catch (8) is produced from a planar metal sheet solely by means of cold-forming techniques.

## Revendications

1. Dispositif d'arrêt (8) d'un dispositif de synchronisation (25), qui, dans l'état installé, peut être déplacé axialement sur sa périphérie extérieure par rapport à un corps de synchronisation (1) présentant des dents (26), le dispositif d'arrêt (8) présentant :
- un élément d'encliquetage (9) précontraint par un élément de ressort (15) pour l'encliquetage dans une position de réglage et
- un boîtier (14), qui présente un pot (34) adapté à l'élément de ressort (15), et une surface radiale (16) orientée vers l'extérieur, approximativement rectangulaire, avec des bords latéraux (19, 20), l'élément d'encliquetage (9) étant dispose à l'intérieur de la surface radiale (16),
- des ailes (21, 22) qui sont disposées au niveau des bords latéraux (19, 20) et qui sont réalisées essentiellement parallèlement à la surface radiale (16),
**caractérisé en ce que** les ailes (21, 22) sont réalisées en affleurement avec la surface radiale (16), vu dans la direction radiale, et **en ce que** la largeur axiale des ailes (21, 22) est inférieure à la largeur axiale minimale de la surface radiale (16).

2. Dispositif d'arrêt selon la revendication 1, **caractérisé en ce que** les ailes (21, 22) présentent une courbure qui correspond au rayon extérieur du corps de synchronisation (1).

3. Dispositif d'arrêt selon la revendication 1, **caractérisé en ce que** la longueur des ailes (21, 22) dans la direction périphérique est réalisée de telle sorte que le dispositif d'arrêt (8) soit guidé par des dents adjacentes (26) du corps de synchronisation (1).

4. Dispositif d'arrêt selon la revendication 1, **caractérisé en ce que** les ailes (21, 22) sont réalisées sous forme rectangulaire.

5. Dispositif d'arrêt selon la revendication 1, **caractérisé en ce que** le boîtier (14) est fabriqué d'une seule pièce avec les ailes (21, 22).

6. Dispositif d'arrêt selon la revendication 1, **caractérisé en ce que** les bords latéraux (19, 20) présentent des encoches (31) au niveau d'un bout d'aile.

7. Dispositif d'arrêt selon la revendication 1, **caractérisé en ce que** la surface radiale (16) présente au niveau de ses extrémités axiales des parois axiales (28, 29) orientées radialement vers l'intérieur.

8. Dispositif d'arrêt selon la revendication 6, **caractérisé en ce que** la surface radiale (16) forme le fond et les parois axiales (28, 29) forment les parois latérales d'un corps de base (30) en forme de cuvette orienté radialement vers l'intérieur.

9. Dispositif d'arrêt selon la revendication 1, **caractérisé en ce que** le dispositif d'arrêt (8) est réalisé en tôle ou en plastique.

10. Dispositif d'arrêt selon la revendication 1, **caractérisé en ce que** le dispositif d'arrêt (8) présente entre les ailes (21, 22) et l'élément d'encliquetage (9) des évidements (32) de type fenêtre.

11. Système de synchronisation (24) comprenant un corps de synchronisation (1), un manchon de commande (2) et un dispositif d'arrêt (8) selon l'une quelconque des revendications 1 à 10, **caractérisé en ce que** la largeur axiale du corps de synchronisation (1) est supérieure d'au moins 50 % à la largeur axiale des ailes (21, 22).

12. Procédé de fabrication d'un dispositif d'arrêt selon l'une quelconque des revendications 1 à 10, **caractérisé en ce que** le boîtier du dispositif d'arrêt (8) est fabriqué en tôle plane exclusivement au moyen de techniques de formage à froid.
